# FASCICULE DE BREVET EUROPEEN

(11) **EP 4 173 899 B1**
(45) Date de publication et mention de la délivrance du brevet: **12.06.2024**
(21) Numéro de dépôt: 22203742.6
(22) Date de dépôt: 26.10.2022
(51) Int. Cl.: B60R 21/215, B29C 43/18, B60R 21/217

(54) **COMPOSANT DE GARNITURE DE VÉHICULE ET UN PROCÉDÉ DE FABRICATION D'UN TEL COMPOSANT DE GARNITURE**
FAHRZEUGVERKLEIDUNGSTEIL UND VERFAHREN ZUR HERSTELLUNG EINES SOLCHEN VERKLEIDUNGSBAUTEILS
VEHICLE TRIM COMPONENT AND A METHOD FOR MANUFACTURING SUCH A TRIM COMPONENT

(30) Priorité: 27.10.2021 FR 2111397
(43) Date de publication de la demande: 03.05.2023
(73) Titulaire: Faurecia Intérieur Industrie, 92000 Nanterre (FR)
(72) Inventeur: LEGRAND, Pierre, 60240 CHAUMONT EN VEXIN (FR); TORRECILLAS, Jean-Louis, 60000 BEAUVAIS (FR)
(74) Mandataire: Plasseraud IP

(56) Documents cités:
- JP-A- 2010 069 854
- US-A1- 2015 217 712

## Description

### Domaine technique de l'invention

L'invention concerne un composant de garniture ou d'habillage pour un véhicule en particulier pour un véhicule automobile. L'invention concerne également un procédé de fabrication d'un tel composant de garniture.

### Etat de la technique antérieure

Dans l'industrie automobile, on cherche à réduire le nombre de pièces en plastique et à utiliser de plus en plus de pièces en matières naturelles plus facilement recyclable. A cet effet, des composants de garniture tel que par exemple la planche de bord sont fabriqués à partir de panneau de support comprenant des fibres naturelles. Il est nécessaire de fixer à ces panneaux de support des pièces de guidage de coussin gonflable pour répondre à des besoins de sécurité. Toutefois, dans certains panneaux, la pièce de guidage n'est pas fixée de manière solide. Dans d'autres panneaux, l'interface entre la pièce de guidage et le panneau de support n'est pas plane.

Par ailleurs, il est connu de fixer une pièce de guidage de coussin gonflable de sécurité à un panneau de support en fibres par un procédé de compression à chaud et de surmoulage d'un renfort sur le panneau de support. P ar exemple le document US 2015/217712 divulgue un procédé de fabrication d'un composant de garniture dans lequel le panneau de support est chauffé, le panneau de support chauffé est disposé sur la cavité de moulage du premier moule, une ouverture est découpé dans le panneau de support en regard du cadre de renfort, la pièce de guidage de coussin gonflable est disposé dans une cavité de moulage d'une deuxième partie de moule, la première partie de moule et la deuxième partie de moule sont assemblées en insérant le canal de la pièce de guidage dans l'ouverture du panneau de support, le panneau de support est fixé à la collerette en comprimant la deuxième partie de moule contre la première partie de moule.

Toutefois, ce procédé est compliqué et onéreux car le moule est très complexe et car seules certaines matières plastiques peuvent être utilisées en raison de leur capacité d'adhésion. De plus, le fait que le renfort soit surmoulé directement sur le panneau de support entraine une déformation indésirable du panneau de support du fait du retrait du renfort lors de son refroidissement.

### Présentation de l'invention

Un premier but de l'invention est de fixer solidement une pièce de guidage de coussin gonflable à un panneau de support en fibre.

Un deuxième but de l'invention est de fixer une pièce de guidage de coussin gonflable à un panneau de support en gardant une interface plane entre la pièce de guidage et le panneau de support.

Un troisième but de l'invention est de fixer une pièce de guidage de coussin gonflable à un panneau de support à une position précise du panneau de support.

### Résumé de l'invention

La présente invention a pour objet un composant de garniture de véhicule tel que mentionné dans la revendication 1.

Les caractéristiques exposées dans les revendications dépendantes peuvent, optionnellement, être mises en oeuvre. Elles peuvent être mises en oeuvre indépendamment les unes des autres ou en combinaison les unes avec les autres. de support.

L'invention concerne également un procédé de fabrication d'un composant de garniture pour véhicule, tel que mentionné dans la revendication 8.Selon un mode de réalisation particulier, les caractéristiques exposées dans la revendication dépendante 9 peuvent, optionnellement, être mises en oeuvre.

### Brève description des figures

[Fig. 1] est une section schématique partielle d'un composant de garniture de véhicule selon l'invention ;
[Fig. 2] est une partie agrandie de la figure 1 ;
[Fig. 3] est une section d'une partie du composant de garniture illustré sur la figure 1 ;
[Fig. 4] est une partie agrandie de la figure 2 ; et
[Fig. 5] est un diagramme des étapes du procédé de fabrication d'un composant de garniture selon l'invention.

### Description détaillée de l'invention

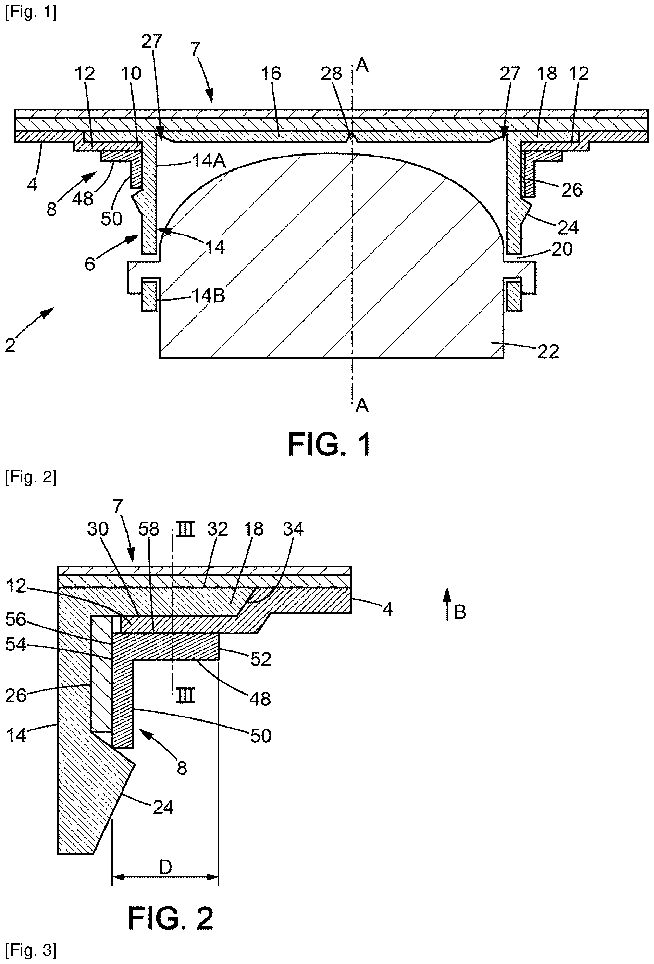

Dans la description qui va suivre, les termes « haut », « bas », « inférieur » et « supérieur » sont définis lorsque le composant de garniture selon l'invention est disposé comme illustré sur la figure 1, et ne sont nullement limitatifs.

En référence à la figure 1, le composant de garniture 2 de véhicule selon l'invention comporte un panneau de support 4, une pièce de guidage 6 de coussin gonflable, un revêtement décoratif 7 fixé sur le panneau de support et sur une partie de la pièce de guidage 6 et un cadre de renfort 8 fixé sous le panneau de support.

Le composant de garniture 2 est par exemple une planche de bord de véhicule ou une partie de planche de bord de véhicule. En variante, le composant de garniture 2 est une console centrale de véhicule ou un panneau de porte de véhicule.

Le panneau de support 4 donne sa forme géométrique au composant de garniture 2. Le panneau de support 4 thermocompressé présente une épaisseur de 1,4 millimètres à 2,5 millimètres.

Le panneau de support 4, la pièce de guidage 6 et le cadre de renfort 8 sont fixés les uns aux autres par compression à chaud.

Le panneau de support 4 est muni d'une ouverture traversante 10 et d'un bord périphérique 12 entourant l'ouverture.

Le panneau de support 4 est réalisé par thermocompression. Par exemple, le panneau de support 4 est réalisé par compression à chaud. Le panneau de support 4 comprend des fibres. Le panneau de support 4 comprend par exemple des fibres naturelles et un matériau thermoplastique. Les fibres naturelles sont par exemple des fibres de chanvre, de bois, de lin, de kénaf et/ou de sisal, de préférence des fibres de bois. Le matériau thermoplastique est par exemple du polypropylène (PP) et/ou du polyéthylène téréphtalate (PET), de préférence du polypropylène (PP). Le panneau de support 4 se présente, avant l'étape de thermocompression, sous la forme d'un tapis non-tissé comprenant des fibres entremêlées. Dans un exemple particulier, le tapis non-tissé comprend des fibres naturelles et des fibres thermoplastiques entremêlées. Le tapis non tissé est par exemple formé par aiguilletage des fibres. Le tapis non tissé présente une épaisseur de 8 millimètres à 14 millimètres avant l'étape de thermocompression.

La pièce de guidage 6 de coussin gonflable comporte un canal 14, un volet 16 refermant au moins en partie une première extrémité 14A du canal 14 et une collerette 18 disposée autour du canal dans le prolongement du volet 16. La deuxième extrémité du canal, opposée à la première extrémité 14A, est référencée 14B.

Selon un mode de réalisation particulier, la pièce de guidage 6 comprend plusieurs volets 16 refermant au moins en partie la première extrémité du canal 14, par exemple deux volets 16, comme représenté sur la figure 1.

La pièce de guidage 6 est de préférence réalisée d'une seule pièce par moulage, par exemple par moulage par injection, d'une matière plastique.

Le canal 14 est agencé dans l'ouverture 10 du panneau de support 4. Il est généralement appelé canal de tir. Le canal 14 délimite un passage interne pour le déploiement du coussin gonflable de sécurité dans l'habitacle du véhicule. Le passage interne du canal 14 est opposé à un contour externe du canal 14.

Le canal 14 est apte à guider un coussin gonflable de sécurité, lorsque celui-ci se déploie. Le canal 14 présente une forme tubulaire.

Le canal 14 présente par exemple une section transversale de forme rectangulaire. Le canal 14 comprend par exemple quatre parois opposées deux à deux. La canal 14 s'étend autour d'un axe A-A. Le canal 14 s'étend depuis la première extrémité 14A du canal 14 à la deuxième extrémité 14B du canal 14. Le canal comporte au voisinage de la deuxième extrémité 14B du canal 14, autrement dit dans sa partie inférieure, des lumières 20 dans lesquelles un carter 22 est crocheté. Le carter 22 est également fixé au canal 14 par des moyens de fixation non représentés. Le carter 22 contient un générateur et un coussin gonflable de sécurité. Le générateur est apte à générer le déploiement du coussin gonflable de sécurité. Le coussin gonflable de sécurité est apte à se déployer dans l'habitacle du véhicule en passant par le canal 14, lorsque le véhicule est soumis à un choc.

Le pourtour du canal 14 comporte dans sa partie médiane, s'étendant entre la première extrémité et la deuxième extrémité du canal 14, des éléments de verrouillage 24 et/ou des nervures 26 représentés schématiquement sur les figures. Par « pourtour du canal 14 », on entend le contour externe du canal 14, plus particulièrement la face externe des parois du canal 14. Ces nervures 26 s'étendent au niveau du cadre de renfort 8. Le cadre de renfort 8 étant, au moins en partie, en appui contre les nervures 26.

Le canal 14 peut par exemple comporter entre quatre et seize éléments de verrouillage 24 et entre quatre et seize nervures 26, disposés chacun et chacune sur une paroi du canal.

Les éléments de verrouillage 24 sont propres à bloquer le cadre de renfort 8 en butée contre le bord périphérique 12 du panneau de support 4. Les éléments de verrouillage 24 comprennent chacun une patte de fixation à emboîtage élastique. De préférence, les pattes de fixation à emboîtage élastique sont réversibles. Les pattes de fixation à emboîtage élastique se déforment lors de l'assemblage et de la fixation de la pièce de guidage 6 au panneau de support 4. Puis, elles reprennent leur forme initiale, comme explicité dans le procédé de fabrication décrit ci-après. Avantageusement, les éléments de verrouillage 24 sécurisent la fixation de la pièce de guidage 6 au panneau de support 4.

Les nervures 26 sont par exemple agencées entre les éléments de verrouillage 24 et la collerette 18. Avantageusement, les nervures permettent un positionnement précis du cadre de renfort 8 par rapport à la pièce de guidage 6.

Le volet 16 referme au moins une partie de la première extrémité du canal 14, autrement dit l'extrémité supérieure du canal 14. Le volet 16 est relié au canal 14 par une charnière 27 autour de laquelle le volet 16 est mobile en rotation lors du déploiement du coussin gonflable de sécurité entre une position fermée dans laquelle le volet 16 referme au moins une partie de la première extrémité du canal 14 et une position ouverte dans laquelle le volet 16 libère l'au moins une partie de la première extrémité du canal 14. Dans le mode de réalisation dans lequel la pièce de guidage 6 comprend plusieurs volets 16, chaque volet 16 est relié au canal 14 par une charnière 27 et une ligne d'affaiblissement 28 est arrangée à la jonction entre les volets 16. Par exemple, lorsque la pièce de guidage 6 comprend deux volets 16, une ligne d'affaiblissement 28 est arrangée à la jonction entre les deux volets 16, comme illustré à la figure 1. La ligne d'affaiblissement 28 est par exemple formée par une restriction d'épaisseur du volet 16. La ligne d'affaiblissement 28 est propre à se déchirer, avantageusement sans projeter des particules du volet 16 dans l'habitacle, lors du déploiement du coussin gonflable de sécurité.

La collerette 18 est agencée autour de la première extrémité 14A du canal 14, autrement dit l'extrémité supérieure du canal 14, dans le prolongement du volet 16. Par « agencée autour de la première extrémité du canal 14 », on entend que la collerette 18 s'étend à partir de la première extrémité 14A du canal 14 vers l'extérieur du canal 14.

Selon un mode de réalisation particulier, la collerette 18 est agencée autour de la totalité de la première extrémité du canal 14.

La collerette 18 forme avec le volet 16 une surface sensiblement plane sur laquelle le revêtement décoratif 7 est fixé. La collerette 18 présente une face d'appui 30, une face opposée 32 à la face d'appui 30 et une tranche 34 reliant la face d'appui 30 à la face opposée 32.

Le revêtement décoratif 7 est fixé sur la face opposée 32.

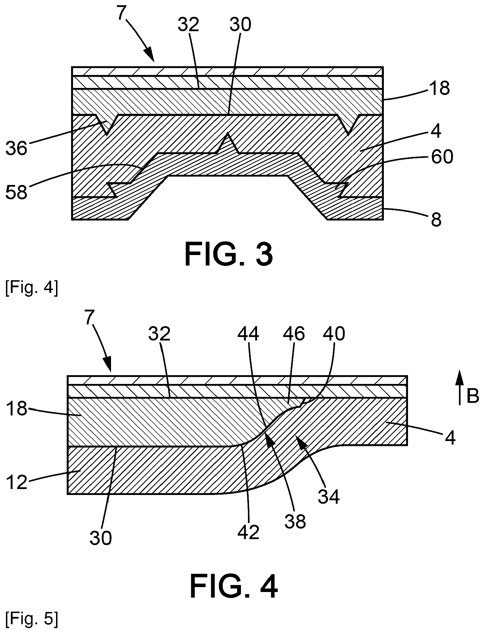

La face d'appui 30 est fixée par compression à chaud au bord périphérique 12 du panneau de support 4. La face d'appui 30 est fixée à une face supérieure du bord périphérique 12. De préférence, la face d'appui 30 est munie d'un ou plusieurs relief(s) 36 pour augmenter l'adhésion de la collerette 18 au panneau de support 4, comme représenté sur la figure 3. Ces reliefs 36 sont, par exemple, constitués par des picots, des nervures, des bosses etc. Ces reliefs 36 augmentent la surface d'adhésion. Ces reliefs présentent par exemple une hauteur comprise entre 0,5 millimètre et 2,5 millimètres. La densité de ces reliefs est comprise entre 5 et 15 par centimètre carré.

En référence à la figure 4, la tranche 34 de la collerette 18 présente, selon une direction B partant de la face d'appui 30 et allant vers la face opposée 32, un profil en S 38 et un chanfrein 40 permettant d'améliorer la fixation du panneau de support à la pièce de guidage et d'assurer la planéité de l'interface entre la pièce de guidage et le panneau de support.

En particulier, le profil en S 38 comporte, selon la direction B, une première surface arrondie 42 ayant un centre de courbure situé à l'intérieur de la collerette 18 suivie d'une surface 44 sensiblement plane et inclinée par rapport à un plan vertical, continué par une deuxième surface arrondie 46 ayant un centre de courbure à l'extérieur de la collerette 18.

De préférence, la surface 44 présente un angle d'inclinaison α compris entre 0° et 30° par rapport à un plan vertical.

Le chanfrein 40 délimite une portion d'épaisseur réduite située au niveau de la tranche 34, formant une marche à l'extrémité de la collerette 18. Il permet d'éviter un défaut tel que par exemple une bavure, lors de l'injection de la collerette 18 de la pièce de guidage 6. L'épaisseur de la collerette 18 au début du chanfrein est sensiblement égale à 0,5 millimètre.

De préférence, le chanfrein 40 présente un angle d'inclinaison β compris entre 0° et 60° par rapport à un plan vertical.

Le revêtement décoratif 7 est fixé sur le panneau de support 4, sur la collerette 18 et sur le volet 16. Il est propre à se déchirer lorsque le volet 16 s'ouvre et que le coussin gonflable se déploie.

Dans le mode de réalisation représenté sur la figure 1, le revêtement décoratif 7 comprend une couche de mousse et un revêtement externe. Le revêtement décoratif 7 présente une épaisseur comprise entre 0,8 millimètre et 3,5 millimètres. La couche de mousse s'étend entre le revêtement externe et la surface formée par le panneau de support 4, la collerette 18 et le volet 16. Le revêtement externe peut être réalisé dans tout type de peau tel que par exemple, un revêtement en polypropylène, un textile ou un cuir.

Le cadre de renfort 8 est une pièce rapportée agencée autour du canal 14. Le cadre de renfort 8 est fixée au bord périphérique 12 du panneau de support 4 par compression à chaud. Le cadre de renfort 8 est fixé à une face inférieure du bord périphérique 12, opposée à la face supérieure du bord périphérique 12. Le cadre de renfort 8 est adapté pour fixer la position de la pièce de guidage 6 par rapport au panneau de support 4. En particulier, il permet de plaquer et de fixer le bord périphérique 12 du panneau de support 4 contre la collerette 18 pendant l'opération de compression à chaud. Ainsi, le bord périphérique 12 du panneau de support 4 est maintenu entre le cadre de renfort 8 et la collerette 18.

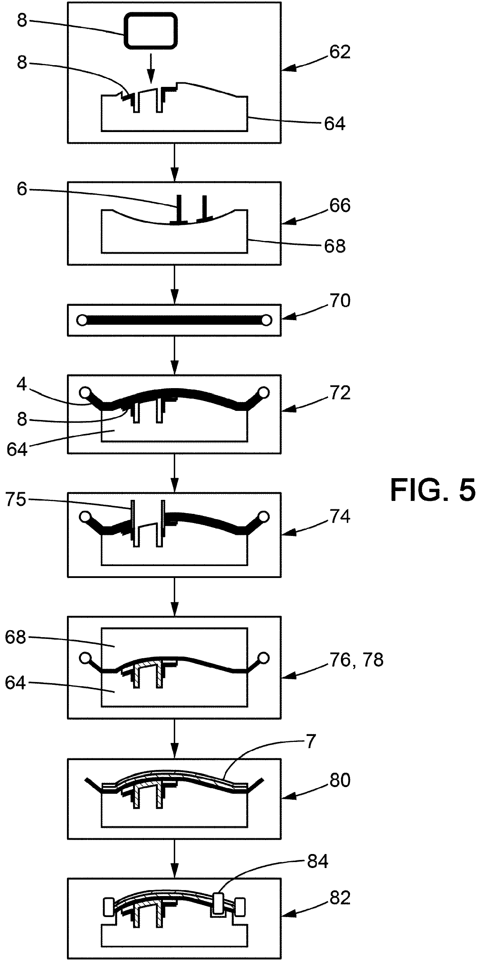

Le cadre de renfort 8 présente une forme complémentaire de la forme du canal 14. Ainsi, le cadre de renfort 8 présente par exemple une forme sensiblement rectangulaire comprenant quatre branches, comme illustrée sur la figure 5. Le cadre de renfort 8 est de préférence réalisé d'une seule pièce par moulage, par exemple par moulage par injection, d'une matière plastique, comprenant par exemple du polypropylène.

Le cadre de renfort 8 comprend un anneau 48 s'étendant dans un plan sensiblement perpendiculaire à la direction axiale A-A, et une jupe 50 s'étendant sensiblement perpendiculairement à l'anneau 48. Chaque branche du cadre de renfort 8 présente une section en forme de L.

En référence à la figure 2, l'anneau 48 comporte un bord extérieur libre 52 et une ouverture centrale 54 délimitant un bord intérieur 56. La jupe 50 s'étend à partir du bord intérieur 56 de l'anneau 48 vers un côté inférieur de l'anneau 48. La jupe 50 s'étend entre une extrémité liée à l'anneau 48 et une extrémité libre, opposée à l'extrémité liée à l'anneau 48. De préférence, la dimension D de l'anneau 48 définie entre le bord intérieur 56 et le bord extérieur 52 est comprise entre 5 millimètres et 50 millimètres et est, de préférence comprise entre 10 millimètres et 30 millimètres. Cette dimension entre les bords intérieur 56 et extérieur 52 permet également de palier à un défaut de positionnement de la découpe du panneau de support.

Le bord intérieur 56 de l'anneau 48 est au contact des nervures 26 du canal 14 pour assurer un positionnement précis du cadre de renfort 8 par rapport à la pièce de guidage 6.

L'anneau 48 comporte une face 58 fixée par compression à chaud au bord périphérique 12 du panneau de support. De préférence, cette face 58 est munie d'un relief ou de plusieurs reliefs 60 pour augmenter l'adhésion de l'anneau au panneau de support. Ces reliefs 60 sont constitués par des picots, des nervures ou des bosses, comme visible sur la figure 3. Ces reliefs 60 présentent par exemple une hauteur comprise entre 0,5 millimètre et 2,5 millimètres. La densité de ces reliefs est comprise entre 5 et 15 par centimètre carré.

La jupe 50 présente une forme complémentaire au canal 14. Elle est emboîtée autour du canal.

Avantageusement, la jupe 50 renforce la stabilité et le bon positionnement du cadre de renfort 8 par rapport à la pièce de guidage 6.

Les éléments de verrouillage 24 de la pièce de guidage 6 sont en appui contre l'extrémité libre de la jupe 50.

En variante, le canal 14 comporte un unique élément de verrouillage 24.

En variante, les pattes de fixation à emboitage élastique ne sont pas réversibles. Dans ce cas, leur position déformée après assemblage leur permet de bloquer le cadre de renfort 8 en butée contre le bord périphérique 12 du panneau de support. Selon un mode de réalisation, l'anneau 48 comporte une face 58 fixée au bord périphérique 12 du panneau de support, et dans lequel ladite face 58 de l'anneau est munie d'au moins un relief 60 pour augmenter l'adhésion de l'anneau 48 au panneau de support 4.

Selon un mode de réalisation, la collerette 18 comporte une face d'appui 30 fixée au bord périphérique 12 du panneau de support 4, ladite face d'appui 30 étant munie d'au moins un relief 36 pour augmenter l'adhésion de la collerette 18 au panneau de support 4.

Selon un mode de réalisation, la collerette 18 comporte une face d'appui 30 fixée au bord périphérique 12 du panneau de support 4, une face opposée 32 à la face d'appui et une tranche 34 reliant la face d'appui 30 à la face opposée 32, la tranche 34 comportant, selon une direction partant de la face d'appui 30 et allant vers la face opposée 32, un profil en forme S 38 et un chanfrein 40.

Selon un mode de réalisation, l'anneau 48 comporte une face 58 fixée au bord périphérique 12 du panneau de support, et ladite face 58 de l'anneau est munie d'au moins un relief 60 pour augmenter l'adhésion de l'anneau 48 au panneau de support 4.

Selon un mode de réalisation, la collerette 18 comporte une face d'appui 30 fixée au bord périphérique 12 du panneau de support 4, ladite face d'appui 30 étant munie d'au moins un relief 36 pour augmenter l'adhésion de la collerette 18 au panneau de support 4.

Selon un mode de réalisation, la collerette 18 comporte une face d'appui 30 fixée au bord périphérique 12 du panneau de support 4, une face opposée 32 à la face d'appui et une tranche 34 reliant la face d'appui 30 à la face opposée 32 la tranche 34 comportant, selon une direction partant de la face d'appui 30 et allant vers la face opposée 32, un profil en forme S 38 et un chanfrein 40.

Selon un mode de réalisation, le cadre de renfort 8 est réalisé en matière plastique. En référence à la figure 5, le procédé fabrication du composant de garniture selon l'invention débute par une étape 62 au cours de laquelle le cadre de renfort 8 est disposé à l'intérieur d'une cavité de moulage d'une première partie de moule 64.

Au cours d'une étape 66, la pièce de guidage 6 de coussin gonflable est agencée dans une cavité de moulage d'une deuxième partie de moule 68.

Au cours d'une étape 70, le panneau de support 4 est chauffé à une température comprise entre 160°C et 220°C, de préférence entre 200°C et 220°C, en particulier entre 205°C et 210 °C.

Au cours d'une étape 72, le panneau de support 4 chauffé est posé sur la cavité de moulage de la première partie de moule 64 et sur le cadre de renfort 8, notamment sur l'anneau 48 du cadre de renfort. Le panneau de support commence à se déformer, notamment par gravité et/ou par une action du moule, pour épouser la forme de la cavié de moulage de la première partie de moule 64 et du cadre de renfort 8.

Au cours d'une étape 74, une ouverture 10 est découpée dans le panneau de support par des éléments de découpe 75. Les éléments de découpe 75 prennent appui sur le cadre de renfort 8 pour découper l'ouverture 10.

Au cours d'une étape 76, la première partie de moule 64 et la deuxième partie de moule 68 sont assemblées en insérant le canal 14 de la pièce de guidage 6 dans l'ouverture10 du panneau de support 4 et dans le cadre de renfort 8. Lors de l'insertion du canal 14 dans le cadre de renfort 8, les pattes de fixation à déformation élastique des éléments de verrouillage 24 se déforment. Puis, elles reprennent leur position initiale. Dans cette position initiale, les pattes de fixation sont disposées contre l'extrémité libre de la jupe 50 du cadre de renfort 8. Elles forment une butée de sécurité en cas où la fixation par compression à chaud se désolidarise.

Au cours d'une étape 78, la première partie de moule 64 et la deuxième partie de moule 68 sont comprimées l'un contre l'autre. Au cours de cette compression, le bord périphérique 12 du panneau de support 4 est fixé contre la collerette18 de la pièce de guidage 6 et contre le cadre de renfort 8, en particulier contre l'anneau 48 du cadre de renfort 8. L'étape de compression 78 doit être effectuée au maximum 20 secondes après chauffage du panneau de support.

Au cours d'une étape 80, le revêtement décoratif 7 est fixé sur la face supérieure du panneau de support 4 et sur la face supérieure du volet 16 et de la collerette 18.

Au cours d'une étape optionnelle 82, des ouvertures 84 sont pratiquées au travers du revêtement décoratif 7 et du panneau de support 4. Ces ouvertures sont destinées aux passages d'équipements tel qu'un autoradio ou un aérateur. Les étapes du procédé ont lieu de l'étape 62 à l'étape 82, comme illustré sur la figure 5.

## Revendications

1. Composant de garniture (2) de véhicule, le composant de garniture comprenant :
- un panneau de support (4) thermocompressé muni d'une ouverture (10) et d'un bord périphérique (12) entourant l'ouverture,
- une pièce de guidage (6) de coussin gonflable comportant un canal (14) agencé dans l'ouverture (10) du panneau de support (4), un volet (16) refermant au moins en partie une première extrémité (14A) du canal (14) et une collerette (18) agencée autour du canal dans le prolongement du volet, le bord périphérique (12) du panneau de support étant fixé contre la collerette (18),
- un cadre de renfort (8) propre à fixer la position de la pièce de guidage (6) par rapport au panneau de support (4), le cadre de renfort (8) étant fixée au bord périphérique (12) du panneau de support (4) **caractérisé en ce que** la cadre de renfort est une pièce rapportée emmanchée autour du canal (14), et **en ce que** le canal (14) est pourvu d'au moins un élément de verrouillage (24) propre à bloquer le cadre de renfort (8) en butée contre le bord périphérique (12) du panneau de support.

2. Composant de garniture (2) de véhicule selon la revendication 1, dans lequel le au moins un élément de verrouillage (24) comprend une patte de fixation à emboitage élastique.

3. Composant de garniture (2) de véhicule selon l'une quelconque des revendications 1 et 2, dans lequel le cadre de renfort (8) comprend un anneau (48) s'étendant dans un plan parallèle à la collerette (18), et une jupe (50) s'étendant perpendiculairement à l'anneau (48) et enserrant le canal (14).

4. Composant de garniture (2) de véhicule selon la revendication 3, dans lequel ledit au moins un élément de verrouillage (24) est en appui contre une extrémité libre de la jupe (50).

5. Composant de garniture (2) de véhicule selon l'une quelconque des revendications 3 et 4, dans lequel l'anneau (48) est adapté pour plaquer le bord périphérique (12) du panneau de support (4) contre la collerette (18), l'anneau (48) comportant un bord extérieur (52) et une ouverture centrale (54) délimitant un bord intérieur (56), et dans lequel la dimension (D) de l'anneau définie entre le bord intérieur (56) et le bord extérieur (52) est comprise entre 5 millimètres et 50 millimètres et est, de préférence, comprise entre 10 millimètres et 30 millimètres.

6. Composant de garniture (2) de véhicule selon l'une quelconque des revendications 1 à 5, dans lequel le pourtour du canal (14) comporte des nervures (26) s'étendant selon une direction axiale (A-A) ; le cadre de renfort (8) s'étendant au moins en partie contre les nervures (26).

7. Composant de garniture (2) de véhicule selon l'une quelconque des revendications 1 à 6, dans lequel le cadre de renfort (8) maintient le bord périphérique (12) du panneau de support contre la collerette (18).

8. Procédé de fabrication d'un composant de garniture (2) pour véhicule, en particulier pour véhicule automobile, le composant de garniture (2) comprenant un panneau de support (4) thermocompressé, un cadre de renfort (8) et une pièce de guidage (6) de coussin gonflable comportant un canal (14), un volet (16) refermant au moins en partie une première extrémité du canal et une collerette (18) disposée autour du canal (14) dans le prolongement du volet (16), le procédé comportant les étapes suivantes :
- disposer (62) le cadre de renfort (8) à l'intérieur d'une cavité de moulage d'une première partie de moule (64),
- chauffer (70) un panneau de support (4);
- disposer (72) le panneau de support (4) chauffé sur la cavité de moulage du premier moule et sur une partie du cadre de renfort (8);
- découper (74) une ouverture (10) dans le panneau de support (4) en regard du cadre de renfort (4);
- disposer (66) la pièce de guidage (6) de coussin gonflable dans une cavité de moulage d'une deuxième partie de moule (68) ;
- assembler (76) la première partie de moule (64) et la deuxième partie de moule (68) en insérant le canal (14) de la pièce de guidage (6) dans l'ouverture (10) du panneau de support (4) et dans le cadre de renfort (8);
- fixer (78) le panneau de support (4) à la collerette (18) et à une partie du cadre de renfort (8) en comprimant la deuxième partie de moule (68) contre la première partie de moule (64).

9. Procédé de fabrication selon la revendication 8 dans lequel le canal (14) de la pièce de guidage (6) est pourvu d'au moins un élément de verrouillage (24), et dans lequel ledit au moins un élément de verrouillage (24) se déforme de façon réversible lors de l'insertion du canal (14) de la pièce de guidage (6) dans l'ouverture (10) du panneau de support (4) et dans le cadre de renfort (8) puis reprend sa forme initiale pour bloquer le cadre de renfort (8) en butée contre un bord périphérique (12) du panneau de support (4).

## Patentansprüche

1. Fahrzeugverkleidungskomponente (2), wobei die Verkleidungskomponente umfasst:
- eine thermokomprimierte Trägerplatte (4) mit einer Öffnung (10) und einer die Öffnung umgebenden Umfangskante (12),
- ein Airbag-Führungsstück (6), das einen Kanal (14), der in der Öffnung (10) der Trägerplatte (4) angeordnet ist, eine Klappe (16), die ein erstes Ende (14A) des Kanals (14) zumindest teilweise verschließt, und einen Flansch (18), der um den Kanal in der Verlängerung der Klappe angeordnet ist, umfasst, wobei die Umfangskante (12) der Trägerplatte gegen den Flansch (18) befestigt ist,
- einen Verstärkungsrahmen (8), der dazu ausgelegt ist, die Position des Führungsstücks (6) in Bezug zur Trägerplatte (4) zu fixieren, wobei der Verstärkungsrahmen (8) an der Umfangskante (12) der Trägerplatte (4) befestigt ist, **dadurch gekennzeichnet, dass** der Verstärkungsrahmen ein Einsatz ist, der um den Kanal (14) herum angepasst ist, und dass der Kanal (14) mit mindestens einem Verriegelungselement (24) versehen ist, das dazu ausgelegt ist, den Verstärkungsrahmen (8) in Anlage gegen die Umfangskante (12) der Trägerplatte zu verriegeln.

2. Fahrzeugverkleidungskomponente (2) nach Anspruch 1, wobei das mindestens eine Verriegelungselement (24) eine federnd einrastende Befestigungslasche umfasst.

3. Fahrzeugverkleidungskomponente (2) nach einem der Ansprüche 1 und 2, wobei der Verstärkungsrahmen (8) einen Ring (48), der sich in einer Ebene parallel zum Flansch (18) erstreckt, und eine Schürze (50), die sich senkrecht zum Ring (48) und um den Kanal (14) herum erstreckt, umfasst.

4. Fahrzeugverkleidungskomponente (2) nach Anspruch 3, wobei das mindestens eine Verriegelungselement (24) an einem freien Ende der Schürze (50) anliegt.

5. Fahrzeugverkleidungskomponente (2) nach einem der Ansprüche 3 und 4, wobei der Ring (48) dazu ausgelegt ist, die Umfangskante (12) der Trägerplatte (4) gegen den Flansch (18) zu drücken, wobei der Ring (48) eine Außenkante (52) und eine zentrale Öffnung (54) umfasst, die eine Innenkante (56) begrenzt, und wobei die zwischen der Innenkante (56) und der Außenkante (52) definierte Abmessung (D) des Rings zwischen 5 Millimetern und 50 Millimetern und vorzugsweise zwischen 10 Millimetern und 30 Millimetern liegt.

6. Fahrzeugverkleidungskomponente (2) nach einem der Ansprüche 1 bis 5, wobei der Umfang des Kanals (14) Rippen (26) umfasst, die sich in einer axialen Richtung (A-A) erstrecken; wobei der Verstärkungsrahmen (8) sich zumindest teilweise gegen die Rippen (26) erstreckt.

7. Fahrzeugverkleidungskomponente (2) nach einem der Ansprüche 1 bis 6, wobei der Verstärkungsrahmen (8) die Umfangskante (12) der Trägerplatte gegen den Flansch (18) hält.

8. Verfahren zum Herstellen einer Verkleidungskomponente (2) für ein Fahrzeug, insbesondere für ein Kraftfahrzeug, wobei die Verkleidungskomponente (2) eine thermokomprimierte Trägerplatte (4), einen Verstärkungsrahmen (8) und ein Airbag-Führungsstück (6) umfasst, das einen Kanal (14), eine Klappe (16), die ein erstes Ende des Kanals zumindest teilweise verschließt, und einen Flansch (18), der in Verlängerung der Klappe (16) um den Kanal (14) herum angeordnet ist, umfasst, wobei das Verfahren die folgenden Schritte umfasst:
- Anordnen (62) des Verstärkungsrahmens (8) innerhalb eines Formhohlraums eines ersten Formteils (64),
- Erhitzen (70) einer Trägerplatte (4);
- Anordnen (72) der erwärmten Trägerplatte (4) auf dem Formhohlraum der ersten Form und auf einem Teil des Verstärkungsrahmens (8);
- Schneiden (74) einer Öffnung (10) in die Trägerplatte (4) gegenüber dem Verstärkungsrahmen (4);
- Anordnen (66) des Airbag-Führungsstücks (6) in einen Formhohlraum eines zweiten Formteils (68);
- Zusammenfügen (76) des ersten Formteils (64) und des zweiten Formteils (68) durch Einführen des Kanals (14) des Führungsstücks (6) in die Öffnung (10) der Trägerplatte (4) und in den Verstärkungsrahmen (8);
- Befestigen (78) der Trägerplatte (4) an dem Flansch (18) und einem Teil des Verstärkungsrahmens (8) durch Drücken des zweiten Formteils (68) gegen das erste Formteil (64).

9. Herstellungsverfahren nach Anspruch 8, wobei der Kanal (14) des Führungsstücks (6) mit mindestens einem Verriegelungselement (24) versehen ist und wobei sich das mindestens eine Verriegelungselement (24) beim Einführen des Kanals (14) des Führungsstücks (6) in die Öffnung (10) der Trägerplatte (4) und in den Verstärkungsrahmen (8) reversibel verformt und dann in seine ursprüngliche Form zurückkehrt, um den Verstärkungsrahmen (8) in Anlage gegen eine Umfangskante (12) der Trägerplatte (4) zu verriegeln.

## Claims

1. A vehicle trim component (2), the trim component comprising:
- a thermocompressed support panel (4) with an opening (10) and with a peripheral edge (12) surrounding the opening,
- an airbag guide piece (6) comprising a channel (14) arranged in the opening (10) of the support panel (4), a flap (16) at least partially closing a first end (14A) of the channel (14) and a flange (18) arranged around the channel in the extension of the flap, the peripheral edge (12) of the support panel being fixed against the flange (18), - a reinforcing frame (8) adapted to fix the position of the guide piece (6) relative to the support panel (4), the reinforcing frame (8) being fixed to the peripheral edge (12) of the support panel (4), **characterized in that** the reinforcing frame is an insert fitted around the channel (14), and **in that** the channel (14) is provided with at least one locking element (24) adapted to lock the reinforcing frame (8) in abutment against the peripheral edge (12) of the support panel.

2. The vehicle trim component (2) according to claim 1, wherein the at least one locking element (24) comprises a resiliently interlocking fixing lug.

3. The vehicle trim component (2) according to any one of claims 1 and 2, wherein the reinforcing frame (8) comprises a ring (48) extending in a plane parallel to the flange (18), and a skirt (50) extending perpendicularly to the ring (48) and surrounding the channel (14).

4. The vehicle trim component (2) according to claim 3, wherein said at least one locking element (24) bears against a free end of the skirt (50).

5. The vehicle trim component (2) according to any one of claims 3 and 4, wherein the ring (48) is adapted to press the peripheral edge (12) of the support panel (4) against the flange (18), the ring (48) comprising an outer edge (52) and a central aperture (54) delimiting an inner edge (56), and wherein the dimension (D) of the ring defined between the inner edge (56) and the outer edge (52) is between 5 millimeters and 50 millimeters and is preferably between 10 millimeters and 30 millimeters.

6. The vehicle trim component (2) according to any one of claims 1 to 5, wherein the periphery of the channel (14) comprises ribs (26) extending in an axial direction (A-A); the reinforcing frame (8) extending at least partially against the ribs (26).

7. The vehicle trim component (2) according to any one of claims 1 to 6, wherein the reinforcing frame (8) holds the peripheral edge (12) of the support panel against the flange (18).

8. A method for manufacturing a trim component (2) for a vehicle, in particular for a motor vehicle, the trim component (2) comprising a thermocompressed support panel (4), a reinforcing frame (8) and an airbag guide piece (6) comprising a channel (14), a flap (16) at least partially closing a first end of the channel and a flange (18) arranged around the channel (14) in the extension of the flap (16), the method comprising the following steps:
- arranging (62) the reinforcing frame (8) inside a mold cavity of a first mold part (64),
- heating (70) a support panel (4);
- arranging (72) the heated support panel (4) on the mold cavity of the first mold and on part of the reinforcing frame (8);
- cutting (74) an opening (10) in the support panel (4) facing the reinforcing frame (4);
- arranging (66) the airbag guide piece (6) in a mold cavity of a second mold part (68);
- assembling (76) the first mold part (64) and the second mold part (68) by inserting the channel (14) of the guide piece (6) into the opening (10) of the support panel (4) and into the reinforcing frame (8);
- fastening (78) the support panel (4) to the flange (18) and part of the reinforcing frame (8) by pressing the second mold part (68) against the first mold part (64).

9. A manufacturing method according to claim 8 wherein the channel (14) of the guide piece (6) is provided with at least one locking element (24), and wherein said at least one locking element (24) reversibly deforms upon insertion of the channel (14) of the guide piece (6) into the opening (10) of the support panel (4) and into the reinforcing frame (8), then returns to its initial shape to lock the reinforcing frame (8) in abutment against a peripheral edge (12) of the support panel (4).
